(19) Europäisches Patentamt
European Patent Office
Office européen des brevets

(11) **EP 3 631 234 B1**

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **18722457.1**

(22) Anmeldetag: **02.05.2018**

(51) Internationale Patentklassifikation (IPC):
*F16F 9/46* (2006.01)    *B60G 17/08* (2006.01)
*F16F 9/34* (2006.01)    *F16F 9/44* (2006.01)

(52) Gemeinsame Patentklassifikation (CPC):
**B60G 17/08; F16F 9/34; F16F 9/44; F16F 9/46; F16F 9/465;** B60G 2500/112

(86) Internationale Anmeldenummer:
**PCT/EP2018/061133**

(87) Internationale Veröffentlichungsnummer:
**WO 2018/215176 (29.11.2018 Gazette 2018/48)**

(54) **REGELBARER SCHWINGUNGSDÄMPFER**

CONTROLLABLE VIBRATION DAMPER

AMORTISSEUR DE VIBRATION RÉGLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2017 DE 102017111157**

(43) Veröffentlichungstag der Anmeldung:
**08.04.2020 Patentblatt 2020/15**

(73) Patentinhaber: **Kendrion (Villingen) GmbH 78048 Villingen-Schwenningen (DE)**

(72) Erfinder:
• **BERGFELD, Björn 72336 Balingen-Endingen (DE)**
• **ZELANO, Frank 78112 St. Georgen (DE)**
• **BRANDENBURG, Holger 78048 Villingen-Schwenningen (DE)**

(74) Vertreter: **Westphal, Mussgnug & Partner Patentanwälte mbB Am Riettor 5 78048 Villingen-Schwenningen (DE)**

(56) Entgegenhaltungen:
WO-A1-93/08416      WO-A1-2015/169529
WO-A1-2016/066314      DE-A1-102015 201 528
JP-B2- 3 781 461      US-A1- 2016 091 044

EP 3 631 234 B1

## Beschreibung

Die Erfindung betrifft einen regelbaren Schwingungsdämpfer, insbesondere für Kraftfahrzeuge, mit einem in einem Arbeitszylinder hin- und herbewegbaren Kolben, der den Arbeitszylinder in einen oberen Arbeitsraum (Zugraum) und einen unteren Arbeitsraum (Druckraum) unterteilt, wobei beide Arbeitsräume über jeweils eine Druckmittelleitung mit einer Ventileinrichtung verbunden sind.

Solche regelbaren Schwingungsdämpfer sind beispielsweise aus DE 38 03 888 C2 bekannt und werden vornehmlich zur Dämpfungskraftsteuerung von Kraftfahrzeugen eingesetzt, um das Fahrzeug je nach Erfordernissen der Fahrstrecke anzupassen. Dies kann in einem Regelkreis des Kraftfahrzeuges selbsttätig und automatisch erfolgen. Es ist jedoch auch möglich, dass der Dämpfungskraftverlauf manuell vom Fahrer eingestellt wird. Die konstruktive Ausführung des Schwingungsdämpfers ist regelmäßig so gestaltet, dass es möglich wird, die Bewegung von Aufbau und Radaufhängung zu erfassen und in solchen Bewegungszuständen eine große Dämpfungskraft zu wählen, in denen die Richtung der erzeugten Dämpfungskraft der Bewegung des Fahrzeugaufbaus entgegengerichtet ist. Eine kleine Dämpfungskraft wird regelmäßig gewählt, wenn die Dämpfungskraft und Aufbaubewegung des Fahrzeuges gleichgerichtet sind. Allerdings kann der Fahrer hier ebenfalls die von ihm gewünschte Dämpfungskraft immer häufiger in Kraftfahrzeugen selbst manuell einstellen. In der DE 38 03 888 C2 verfügt die an den Arbeitszylinder angeschlossene Ventileinrichtung hierfür über zwei Dämpfungselemente, die jeweils einzeln oder gemeinsam in den Strömungsweg schaltbar sind und die für die Zug- und Druckdämpfung jeweils zwei antiparallel geschaltete Rückschlagventile aufweisen. Dabei sind die Rückschlagventile so ausgelegt, dass ein erstes Dämpfungselement in der Zugdämpfung eine hohe Dämpfungskraft und in der Druckdämpfung eine niedrige Dämpfungskraft aufweist, während das andere Dämpfungselement mit zwei antiparallel geschalteten Rückschlagventilen in der Zugdämpfung eine niedrige Dämpfungskraft und in der Druckdämpfung eine hohe Dämpfungskraft erzeugt. Mit einem solchen Schwingungsdämpfer sind jedoch nur zwei verschiedene Dämpfungskennlinien in Druck- und Zugbelastung möglich.

Einen anderen regelbaren Schwingungsdämpfer zeigt die EP 2 470 809 B1. Der darin beschriebene Stoßdämpfer für eine Radaufhängung eines Kraftfahrzeuges ist mit einer Ventileinrichtung versehen, die innerhalb eines Dämpfer- bzw. als Arbeitszylinder eingebaut ist. Die dortige Ventileinrichtung verfügt über zwei als Dämpfungsventile bezeichnete Hauptschieber, die über ein hin- und herschaltbares Schaltventil verbunden sind. Zusätzlich verfügt die dortige an den Arbeitszylinder angeschlossene Ventileinrichtung über mehrere Rückschlagventile. Problematisch bei dieser bekannten Dämpferanordnung ist die Tatsache, dass zwei Hauptschieber Verwendung finden und sie damit konstruktiv aufwändig ist.

Weitere Schwingungsdämpfer sind in der US 2016/0369862 A1, der JP 2009 115 319 A, der US 5 147 018 A, der US 2016/0091044 A1, der WO 2016/066314 A1 und der US 2005/0016086 A1 offenbart.

Die vorliegende Erfindung hat zum Ziel, einen regelbaren Schwingungsdämpfer, insbesondere für Kraftfahrzeuge, bereitzustellen, der im Vergleich zu den bekannten regelbaren Schwingungsdämpfern lediglich einen einzigen Hauptschieber aufweist und deshalb konstruktiv einfach und damit kostengünstig herzustellen ist. Zusätzlich soll der erfindungsgemäße Schwingungsdämpfer ein hohes Maß an Flexibilität hinsichtlich der Einstellung der Dämpfercharakteristik des Schwingungsdämpfers haben.

Dieses Ziel wird durch einen regelbaren Schwingungsdämpfer mit den Merkmalen des Patentanspruchs 1 und des Anspruchs 14 gelöst.

Weiterbildungen eines solchen Schwingungsdämpfers sind in den Unteransprüchen angegeben.

Der erfindungsgemäße regelbare Schwingungsdämpfer ist insbesondere für die Radaufhängung bei Kraftfahrzeugen geeignet und verfügt über einen in einem Arbeitszylinder (Dämpferrohr) hin- und herbewegbaren Kolben, der den Arbeitszylinder in einen oberen Arbeitsraum (Zugraum) und einen unteren Arbeitsraum (Druckraum) unterteilt. Beide Arbeitsräume sind dabei jeweils über eine Druckmittelleitung mit einer Ventileinrichtung verbunden, die folgendes aufweist:

- eine Brückenschaltung mit vier Rückschlagventilen, die kreuzweise in Durchlassrichtung geschaltet sind, wobei die Verbindung eines ersten Brückenzweiges mit zwei zueinander entgegengesetzt geschalteten Rückschlagventilen eine Hochdruckkammer bildet und die Verbindung des zweiten Brückenzweiges mit zwei zueinander entgegengesetzten Rückschlagventilen eine Niederdruckkammer,
- einen zwischen die Niederdruckkammer und Hochdruckkammer angeordneten, hydraulischen Hauptschieber,
- eine Pilotkammer, welche vorzugsweise über ein fünftes Rückschlagventil mit der zum oberen Arbeitsraum (Zugraum) gehörenden Druckmittelleitung in Verbindung steht,
- ein Pilotventil, über welches die Pilotkammer mit der Niederdruckkammer in Verbindung steht, wobei die Pilotkammer über eine Blende mit der Hochdruckkammer in Verbindung steht.

Die Erfindung zeichnet sich also im Wesentlichen dadurch aus, dass die Ventileinrichtung lediglich einen einzigen Hauptschieber aufweist, welcher mit einem geregelten Pilotventil, insbesondere eines geregelten elektromagnetischen Pilotventils, in Wirkverbindung steht. Damit nur ein einziger hydraulischer Hauptschieber Verwendung finden kann, ist erfindungsgemäß eine Brückenschaltung von vier Rückschlagventilen vorgesehen, die kreuzweise in Durchlassrichtung geschaltet sind. Durch die Regelung, insbesondere Stromregelung des Pilotventils können die unterschiedlichen Druckcharakteristika bei der Zug- bzw. Druckbewegung des Kolbens im Arbeitszylinder eingestellt werden.

Gemäß der Erfindung ist vorgesehen, dass die Pilotkammer über eine erste Blende mit der Hochdruckkammer in Verbindung steht. Für den Fall, dass die Pilotkammer über das fünfte Rückschlagventil mit der zum oberen Arbeitsraum gehörenden Druckmittelraum in Verbindung steht, ist vorzugsweise eine weitere Blende zwischen dem fünften Rückschlagventil und der Pilotkammer angeordnet. Alternativ ist die weitere Blende zwischen der zum oberen Arbeitsraum gehörenden Druckmittelleitung und dem fünften Rückschlagventil angeordnet. Durch die Wahl der Größe der beiden wie eine Drossel wirkenden Blenden können Druckunterschiede in der Pilotkammer und in der Hochdruckkammer eingestellt werden, wodurch die Kennlinien für den Druckraum und Zugraum variierbar sind. Die Blenden können aber prinzipiell auch gleich groß gewählt werden. Es ist jedoch je nach Anwendungsfall auch möglich, die Blenden unterschiedlich groß zu wählen. Zudem kann mit der Anordnung der weiteren Blende die Eigenschwingungsneigung des Schwingungsdämpfers reduziert werden.

In einer Weiterbildung der Erfindung ist vorgesehen, dass die vier Rückschlagventile der Brückenschaltung einstellbare Federelemente, z. B. Federteller, aufweisen. Durch die Einstellung der Federkraft dieser Federelemente kann festgelegt werden, bei welchen Drücken die jeweiligen Rückschlagventile öffnen. Hierdurch ist eine Grundcharakteristik des Dämpferverhaltens des regelbaren Schwingungsdämpfers festlegbar.

Eine andere Weiterbildung der Erfindung sieht vor, dass sowohl der Hauptschieber als auch das Pilotventil jeweils über eine hydraulische Steuerleitung mit der Pilotkammer verbunden sind. Diese hydraulische Steuerleitung hat den Zweck der Druckweitergabe, um das Kräftegleichgewicht zu beeinflussen.

Erfindungsgemäß ist in einer Ausführungsform vorgesehen, dass die mit dem unteren Arbeitsraum verbundene Druckmittelleitung mit einem Bodenventil verbunden ist. Darüber hinaus kann zwischen die beiden Druckmittelleitungen ein an sich bekanntes und sogenanntes Blow-Off-Ventil geschaltet sein. Dabei dient das Blow-Off-Ventil dazu, eine maximal erreichbare Dämpferkraft an dem Schwingungsdämpfer einzustellen. Hierfür besteht das Blow-Off-Ventil beispielsweise aus zwei antiparallel geschalteten Rückschlagventilen mit jeweils vorgeschalteter Blende.

Das in den Boden des Arbeitszylinders eingebaute Bodenventil hat den Zweck, eine Grunddämpfung zu erzeugen. Zudem kann hierdurch das Gesamtsystem abgestimmt werden.

In einer bevorzugten Ausführungsform der Erfindung ist das Pilotventil als ein 3/3-Proportionalventil ausgebildet, wobei zwischen einem Ausgang dieses Pilotventils und der Niederdruckkammer eine dritte Blende geschaltet ist. Diese dritte Blende hat eine Sicherheitsfunktion. Fällt nämlich der Strom des elektromagnetischen Pilotventils aus, so wird aufgrund dieser Blende sichergestellt, dass eine "mittlere Dämpfungskennlinie" bei dem Schwingungsdämpfer vorhanden bleibt. Bedingung hierfür ist allerdings eine geeignete Dimensionierung dieser dritten Blende. Eine ähnliche Sicherheitsfunktion kann erreicht werden, wenn die Blende durch ein Blenden-Rückschlagventil ersetzt ist.

In einer Weiterbildung der Erfindung ist vorgesehen, eine vierte Blende parallel zu einem Rückschlagventil am Ausgang des 3/3-Proportional-Pilotventils vorzusehen. Durch diese Maßnahme können Überschwinger in der Dämpfungscharakteristik des Schwingungsdämpfers vermieden werden.

Gemäß einer Weiterbildung des vorschlagsgemäßen Schwingungsdämpfers umfasst das Pilotventil einen von einem Druckmittel durchströmbaren Magnet. Aufgrund der Durchströmbarkeit des Magnets kann die im Betrieb entstehende Wärme aus dem Magnet insbesondere dann gut abgeführt werden, wenn es sich beim Druckmittel um eine Flüssigkeit handelt.

In einer fortentwickelten Weiterbildung umfasst der Magnet einen entlang einer Längsachse bewegbaren Stößel, welcher mit einem ersten Ende ein Verschlusselement betätigt und mit dem ersten Ende in die Niederdruckkammer und mit einem zweiten Ende in eine Magnetkammer hineinragt. Unter einem Magnet sollen alle Einheiten verstanden werden, die zum Betätigen des Verschlusselements benötigt werden, beispielsweise der Stößel, ein Anker und Spulen. Die Einheiten des Magnets sollen im Wesentlichen in der Magnetkammer angeordnet sein. Dadurch, dass der Stößel so angeordnet ist, dass er mit seinen beiden Enden in jeweils eine andere Kammer hineinragt, können Druckunterschiede zwischen den Kammern genutzt werden, um gezielt am Stößel wirkende Schließ- oder Öffnungskräfte zu generieren. Auf diese Weise kann die zum Bewegen des Stößels vom Magnet aufzubringenden Kräfte reduziert und durch zumindest teilweise vom Fluid generierte Kräfte ersetzt werden. Der Energieverbrauch des Schwindungsdämpfers kann so verringert werden. Darüber hinaus können die Druckunterschiede genutzt werden, um bestimmte Öffnungs- oder Schließverhalten des Pilotventils einzustellen, beispielsweise ein Öffnen oder Schließen ab einem bestimmten Druckunterschied.

Gemäß einer Weiterbildung weist der Stößel einen Kanal auf, welcher vom Druckmittel durchströmbar ist und die Niederdrucckammer und die Magnetkammer fluidisch verbindet. Mit dem Kanal wird nicht nur die Durchströmbarkeit für die Wärmeabfuhr bereitgestellt, sondern auch die Möglichkeit eröffnet, bestimmte Abhängigkeiten zwischen den Drücken der Magnetkammer und der Niederdruckkammer zu schaffen. Beispielsweise kann mit der Anordnung und der Durchmesser der Ausgänge des Kanals die auf den Stößel wirkenden Öffnungs- und Schließkräfte beeinflusst werden, um bestimmte Öffnungs- oder Schließverhalten des Pilotventils einzustellen.

Eine fortentwickelte Weiterbildung gibt vor, dass der Stößel zylinderförmig ausgestaltet ist und einen ersten Durchmesser aufweist, das Verschlusselement einen zweiten Durchmesser aufweist, der sich vom ersten Durchmesser unterscheidet, und der Kanal des Stößels am ersten Ende des Stößels mit einer Blende und/oder am zweiten Ende des Stößels mit einer Blende verbunden ist. Dabei ist die Größe der Blende oder der Blenden an den ersten Durchmesser und/oder an den zweiten Durchmesser angepasst. Aus konstruktiven Gründen kann es unumgänglich sein, den Stößel mit einem anderen Durchmesser zu versehen als das Verschlusselement. So kann es sein, dass die Lager zur Lagerung des Stößels nur in bestimmten Durchmessern zur Verfügung stehen, die Verschlusselemente aber hiervon abweichende Durchmesser aufweisen. Aufgrund dieser unterschiedlichen Durchmesser sind die mit dem Druckmittel zusammenwirkenden Flächen, aus welchen sich die auf das Verschlusselement und den Stößel wirkenden Öffnungs- und Schließkräfte ergeben, in den meisten Fällen unterschiedlich, was zu einem unerwünschten Öffnungsund Schließverhalten des Pilotventils führen kann. Beispielsweise können Betriebszustände auftreten, in welchen das Pilotventil überhaupt nicht oder ab einem bestimmten Volumenstrom durch das Pilotventil schlagartig und folglich unkontrolliert öffnet. Dadurch, dass das Druckmittel vor dem Eintritt in den Kanal und/oder nach dem Austritt eine Blende durchströmen muss, kann mit der Wahl der Größe der Blenden ein kontrolliertes Öffnungs- und Schließverhalten eingestellt und insbesondere verhindert werden, dass das Pilotventil überhaupt nicht oder unkontrolliert öffnet. Hieraus ergibt sich, dass der Begriff "mit einer Blende verbunden" insbesondere als eine fluidische Verbindung zu verstehen ist, so dass die Blende oder die Blenden die auf die betreffenden Enden des Stößels wirkenden Drücke und folglich die am Stößel wirkenden Öffnungs- und Schließkräfte beeinflussen können.

Eine alternative Ausführungsform betrifft einen regelbaren Schwingungsdämpfer, insbesondere für Kraftfahrzeuge, mit einem in einem Arbeitszylinder hin- und her bewegbaren Kolben, der den Arbeitszylinder in einen oberen Arbeitsraum (Zugraum) und einen unteren Arbeitsraum (Druckraum) unterteilt, wobei beide Arbeitsräume über jeweils eine Druckmittelleitung mit einer Ventileinrichtung verbunden sind und die Ventileinrichtung Folgendes aufweist:

- eine Brückenschaltung mit vier Rückschlagventilen, die kreuzweise in Durchlassrichtung geschaltet sind, wobei die Verbindung eines ersten Brückenzweiges mit zwei zueinander entgegengesetzt geschalteten Rückschlagventilen eine Hochdruckkammer bildet und die Verbindung des zweiten Brückenzweiges mit zwei weiteren zueinander entgegengesetzten Rückschlagventilen eine Niederdruckkammer,

- einen zwischen die Niederdruckkammer und Hochdruckkammer angeordneten, hydraulischen Hauptschieber,
- eine Pilotkammer, und
- ein geregeltes Pilotventil, über welches die Pilotkammer mit der Niederdruckkammer in Verbindung steht, wobei die Pilotkammer über eine Blende mit der Hochdruckkammer in Verbindung steht, wobei das Pilotventil als ein 3/3-Proportionalventil ausgebildet ist und zwischen einem Ausgang dieses Pilotventils und der Niederdruckkammer eine dritte Blende geschaltet ist.

In dieser Ausführungsform ist die Pilotkammer nicht direkt an die zum Zugraum gehörende Druckmittelleitung angeschlossen. Die oben beschriebenen Effekte können aber dennoch in dieser Ausführungsform ebenfalls erreicht werden.

Erfindungsgemäß ist in dieser Ausführungsform das Pilotventil als ein 3/3-Proportionalventil ausgebildet, wobei zwischen einem Ausgang dieses Pilotventils und der Niederdruckkammer eine dritte Blende geschaltet ist. Diese dritte Blende hat eine Sicherheitsfunktion. Fällt nämlich der Strom des elektromagnetischen Pilotventils aus, so wird aufgrund dieser Blende sichergestellt, dass eine "mittlere Dämpfungskennlinie" bei dem Schwingungsdämpfer vorhanden bleibt. Bedingung hierfür ist allerdings eine geeignete Dimensionierung dieser dritten Blende. Eine ähnliche Sicherheitsfunktion kann erreicht werden, wenn die Blende durch ein Blenden-Rückschlagventil ersetzt ist.

In einer weitergebildeten Ausführungsform umfasst das Pilotventil einen von einem Druckmittel durchströmbaren Magnet. Aufgrund der Durchströmbarkeit des Magnets kann die im Betrieb entstehende Wärme aus dem Magnet insbesondere dann gut abgeführt werden, wenn es sich beim Druckmittel um eine Flüssigkeit handelt.

Gemäß einer weiteren Ausführungsform umfasst der Magnet einen entlang einer Längsachse bewegbaren Stößel, welcher mit einem ersten Ende ein Verschlusselement betätigt und mit dem ersten Ende in die Pilotkammer und mit einem zweiten Ende in eine Magnetkammer hineinragt. Dadurch, dass der Stößel so angeordnet ist, dass er mit seinen beiden Enden in jeweils eine andere Kammer hineinragt, können Druckunterschiede zwischen den Kammern genutzt werden, um gezielt am Stößel wirkende Schließoder Öffnungskräfte zu generieren. Auf diese Weise kann die zum Bewegen des Stößels vom Magnet aufzubringenden Kräfte reduziert und durch zumindest teilweise vom Fluid generierte Kräfte ersetzt werden. Der Energieverbrauch des Schwindungsdämpfers kann so verringert werden. Darüber hinaus können die Druckunterschiede genutzt werden, um bestimmte Öffnungs- oder Schließverhalten des Pilotventils einzustellen, beispielsweise ein Öffnen oder Schließen ab einem bestimmten Druckunterschied.

Gemäß einer weiterentwickelten Weiterbildung weist der Stößel einen Kanal auf, welcher vom Druckmittel durchströmbar ist und die Pilotkammer und die Magnetkammer fluidisch verbindet. In diesem Fall kann die Pilotkammer auch über den Kanal in den Druckmittelkreislauf integriert werden. Es hat sich herausgestellt, dass sich in dieser Ausbildung sowohl ein kontrolliertes Öffnungs- und Schließverhalten erzielen als auch die Eigenschwingungsneigung des Schwingungsdämpfers reduzieren lässt.

Bei einer anderen Weiterbildung ist der Stößel zylinderförmig ausgestaltet und weist einen ersten Durchmesser auf, wobei das Verschlusselement einen zweiten Durchmesser aufweist, der sich vom ersten Durchmesser unterscheidet. Der Kanal des Stößels mündet am ersten Ende in die Pilotkammer und ist am zweiten Ende des Stößels mit der weiteren Blende verbunden, wobei die Größe der Blende, über welche die Pilotkammer mit der Hochdruckkammer in Verbindung steht, und die Größe der weiteren Blende an den ersten Durchmesser und an den zweiten Durchmesser angepasst sind. Auch in dieser Weiterbildung lässt sich ein kontrolliertes Öffnungs- und Schließverhalten erzielen und die Eigenschwingungsneigung des Schwingungsdämpfers reduzieren.

Der regelbare Schwingungsdämpfer nach der Erfindung wird nachfolgend im Zusammenhang mit mehreren Ausführungsbeispielen anhand von Figuren näher erläutert. Es zeigen:

Figur 1    einen schematischen Aufbau eines regelbaren Schwingungsdämpfers mit einer Ventileinrichtung zur Dämpfungskraftsteuerung gemäß einem ersten Ausführungsbeispiel,

Figur 2    ein Dämpfungskraft-Volumenstromdiagramm mit Dämpfungskennlinien für den Druckraum zur Erläuterung des Einflusses des Pilotventils und der Blenden der Ventileinrichtung,

Figur 3    ein Dämpfungskraft- Volumenstromdiagramm, ähnlich wie in Figur 2, jedoch für den Zugraum,

Figur 4    ein zweites Ausführungsbeispiel einer Ventileinrichtung eines regelbaren Schwingungsdämpfers,

Figur 5    ein drittes Ausführungsbeispiel eines regelbaren Schwingungsdämpfers,

Figur 6    ein viertes Ausführungsbeispiel des regelbaren Schwingungsdämpfers nach der Erfindung,

Figur 7    ein fünftes Ausführungsbeispiel des regelbaren Schwingungsdämpfers nach der Erfindung,

Figur 8    eine prinzipielle Darstellung eines Ausführungsbeispiels eines Pilotventils im Zugbetrieb,

Figur 9    das in Figur 8 gezeigte Ausführungsbeispiel des Pilotventils im Zugbetrieb,

Figur 10   ein sechstes Ausführungsbeispiel des regelbaren Schwingungsdämpfers nach der Erfindung,

Figur 11   eine prinzipielle Darstellung eines weiteren Ausführungsbeispiels eines Pilotventils im Druckbetrieb,

Figur 12   eine grafische Darstellung der im Pilotventil herrschenden Druckverhältnisse in Abhängigkeit des Hauptvolumenstroms durch das Pilotventil im Zugbetrieb bei ungeeigneter Blendenwahl,

Figur 13   eine grafische Darstellung der im Pilotventil herrschenden Druckverhältnisse in Abhängigkeit des Hauptvolumenstroms durch das Pilotventil im Zugbetrieb bei geeigneter Blendenwahl,

Figur 14   eine grafische Darstellung der im Pilotventil herrschenden Druckverhältnisse in Abhängigkeit des Hauptvolumenstroms durch das Pilotventil im Druckbetrieb bei ungeeigneter Blendenwahl, und

Figur 15   eine grafische Darstellung der im Pilotventil herrschenden Druckverhältnisse in Abhängigkeit des Hauptvolumenstroms durch das Pilotventil im Druckbetrieb bei geeigneter Blendenwahl.

In den nachfolgenden Figuren bezeichnen, sofern nicht anders angegeben, gleiche Bezugszeichen gleiche Teile mit gleicher Bedeutung.

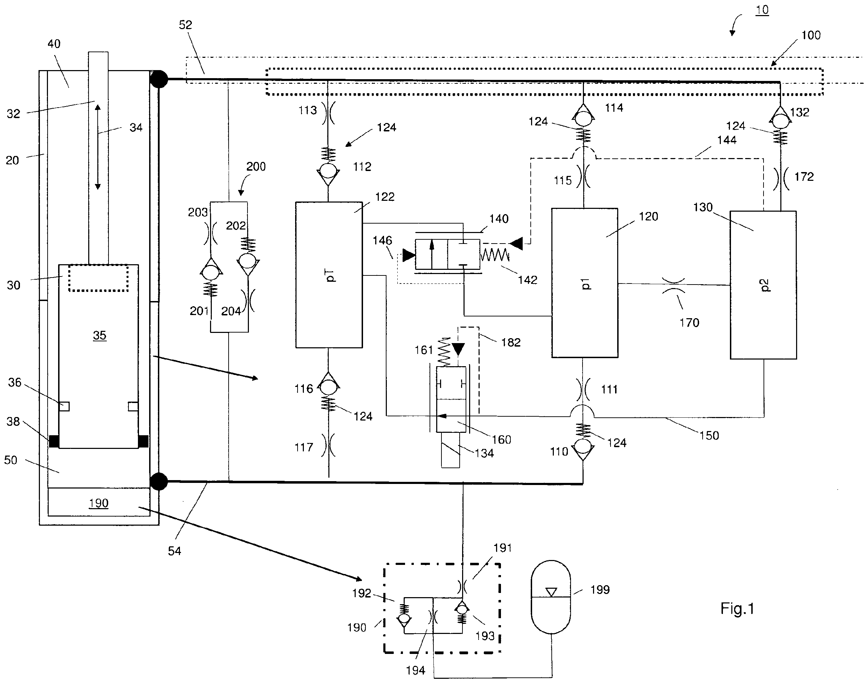

Figur 1 zeigt ein Ausführungsbeispiel eines regelbaren Schwingungsdämpfers anhand seines schematischen Aufbaus. Der Schwingungsdämpfer, der beispielsweise an die Radaufhängung eines Rades eines Kraftfahrzeuges montiert ist, um die Dämpfung der Radaufhängung und damit die Dämpfung des Fahrzeuges beim Fahren einzustellen, ist mit dem Bezugszeichen 10 bezeichnet. Der Schwingungsdämpfer 10 verfügt über ein Dämpferrohr, das im Folgenden als Arbeitszylinder 20 bezeichnet ist. In diesem Arbeitszylinder 20 ist ein Kolben 30, der an einer Kolbenstange 32 befestigt ist, hin- und herbewegbar. Dabei ist der Kolben 30 mit der Radaufhängung des Kraftfahrzeuges gekoppelt. Die Hin- und Herbewegung des Kolbens 30 ist durch einen Bewegungspfeil 34 in der Figur 1 markiert. Wie ersichtlich, kann sich der Kolben 30 in dem Arbeitszylinder 20 beim Hin- und Herbewegen einmal nach unten bewegen und ein anderes Mal nach oben. Im Folgenden wird bei einem sich nach unten Bewegen des Kolbens 30 von einem Drücken des Kolbens 30 und bei einem sich nach oben Bewegen von einem Ziehen des Kolbens gesprochen. Demzufolge befinden sich unterhalb des Kolbens 30 ein Arbeitsraum 50, der als "Druckraum" bezeichnet ist und ein zweiter Arbeitsraum 40 oberhalb des Kolbens 30. Dieser zweite Arbeitsraum ist mit dem Bezugszeichen 40 versehen und als "Zugraum" bezeichnet.

Der obere Arbeitsraum 40 (Zugraum) und der untere Arbeitsraum 50 (Druckraum) sind jeweils mit einer Druckmittelleitung 52, 54 versehen. An diese beiden Druckmittelleitungen 52, 54 ist eine Ventileinrichtung 100 geschaltet, die nachfolgend im Einzelnen erläutert werden wird. Aus Gründen einer einfacheren Darstellmöglichkeit ist in Figur 1 die Ventileinrichtung 100 als außerhalb des Arbeitszylinders 20 angeordnete Ventileinrichtung dargestellt. Allerdings ist dies nur aus Darstellungsgründen so gewählt. Die gesamte Ventileinrichtung 100 sitzt vielmehr innerhalb des topfförmig ausgebildeten Kolbens 30 des Schwingungsdämpfers. Hierfür verfügt der Kolben 30 über in Figur 1 lediglich schematisch dargestellte Bohrungen 36, über welche der Bauraum 35 innerhalb des Kolbens 30 mit dem oberen Arbeitsraum 40 (Zugraum) hydraulisch in Verbindung steht. Zusätzlich sind der obere Arbeitsraum 40 (Zugraum) und der untere Arbeitsraum 50 (Druckraum) über eine am Außenumfang des Kolbens 30 umlaufende Radialdichtung 38 abgedichtet. Die vordere Stirnseite des Kolbens 30 steht deshalb über eine geeignete Öffnung mit dem unteren Arbeitsraum 50 (Druckraum) hydraulisch in Verbindung.

Die an die beiden Druckmittelleitungen 52, 54 geschaltete Ventileinrichtung 100 verfügt über eine Brückenschaltung mit vier Rückschlagventilen 110, 112, 114, 116. Diese Rückschlagventile 110, 112, 114, 116 sind kreuzweise in Durchlassrichtung geschaltet, wobei die Verbindung eines ersten Brückenzweiges mit den zwei zueinander entgegengesetzt geschalteten Rückschlagventilen 110, 114 eine Hochdruckkammer 120 ausbildet und die Verbindung des zweiten Brückenzweiges mit den zwei weiteren zueinander entgegengesetzten Rückschlagventilen 112, 116 zu einer Niederdruckkammer 122 führt. Wie die Figur 1 deutlich zeigt, sind das erste Rückschlagventil 110 und das vierte Rückschlagventil 116 an die untere Druckmittelleitung 54 angeschlossen und stehen deshalb mit dem unteren Arbeitsraum 50 (Druckraum) in Verbindung. Das erste Rückschlagventil 110 ist in Durchlassrichtung zu dem unteren Arbeitsraum 50 (Druckraum) geschaltet. Das vierte Rückschlagventil 116 ist dagegen in Sperrrichtung zu dem unteren Arbeitsraum 50 geschaltet. Das zweite Rückschlagventil 112 und das dritte Rückschlagventil 114 sind dagegen mit der oberen Druckmittelleitung 52 in Verbindung. Hierbei ist das zweite Rückschlagventil 112 in Sperrrichtung zu dem oberen Arbeitsraum 40 (Zugraum) geschaltet und das dritte Rückschlagventil 114 in Durchlassrichtung.

Wie die Darstellung in Figur 1 weiter zeigt, befinden sich in Reihe zu den vier Rückschlagventilen 110, 112, 114, 116 jeweils Blenden 111, 113, 115, 117. Die erste Blende 111 befindet sich zwischen dem ersten Rückschlagventil 110 und der Hochdruckkammer 120. Die zweite Blende 113 befindet sich zwischen der Druckmittelleitung 52 und dem zweiten Rückschlagventil 112. Die dritte Blende 115 befindet sich zwischen der Hochdruckkammer 120 und dem dritten Rückschlagventil 114. Schließlich befindet sich die vierte Blende 117 zwischen der Druckmittelleitung 54 und dem vierten Rückschlagventil 116. Vorzugsweise sind die vier Rückschlagventile 110, 112, 114, 116 der Brückenschaltung mit einstellbaren Federelementen 124 versehen. Hierdurch kann das Öffnungsverhalten der einzelnen Rückschlagventile 110, 112, 114, 116 voreingestellt gewählt werden, je nachdem, wie die Federkraft der einstellbaren Federelemente 124 ausgelegt ist.

Die Ventileinrichtung 100 verfügt darüber hinaus über einen Hauptschieber 140, ein regelbares Pilotventil 160, vorzugsweise ein stromgeregeltes, elektromagnetisches Pilotventil 160 mit einem Magnet 134, der insbesondere als Elektromagnet ausgestaltet ist, sowie über eine Pilotdruckkammer beziehungsweise eine Pilotkammer 130. Die Pilotkammer 130 ist an die obere Druckmittelleitung 52 über ein fünftes Rückschlagventil 132 geschaltet. Dieses fünfte Rückschlagventil 132 befindet sich, wie das dritte Rückschlagventil 114, in Durchlassrichtung zum oberen Arbeitsraum 40 (Zugraum). Die Pilotkammer 130 ist mit der Hochdruckkammer 120 über eine fünfte Blende 170 hydraulisch in Verbindung. Eine sechste Blende 172 ist zwischen das fünfte Rückschlagventil 132 und die Pilotkammer 130 geschaltet.

Das bereits erwähnte Pilotventil 160 ist zwischen die Niederdruckkammer 122 und die Pilotkammer 130 über eine Leitung 150 geschaltet. Das Pilotventil 160 ist vorliegend als stromgeregeltes, elektromagnetisches 2/2-Ventil ausgelegt, das proportional arbeitet. Dies bedeutet, dass je nach Bestromung des Magneten 134 dieses Pilotventils 160 ein mehr oder weniger großer Durchfluss zwischen der Niederdruckkammer 122 und der Pilotkammer 130 durch die Leitung 150 herrschen kann. Das Pilotventil 160 arbeitet gegen eine Federeinrichtung 161 und gegen einen von der Pilotkammer 130 anstehenden Druck. Dies ist in Figur 1 durch die Steuerleitung 182 angedeutet.

Der ebenfalls bereits erwähnte Hauptschieber 140 ist ebenfalls ein 2/2-Ventil, jedoch ein ausschließlich hydraulisch arbeitendes Ventil. Dieser Hauptschieber 140 verbindet die Niederdruckkammer 122 mit der Hochdruckkammer 120. Der Hauptschieber 140 arbeitet einmal gegen eine Federeinrichtung 142 und gegen einen über die Steuerleitung 144 kommenden Druck der Pilotkammer 130. Andererseits ist der Hauptschieber 140 auf seiner gegenüberliegenden Seite von einer von der Hochdruckkammer 120 kommenden Steuerleitung 146 beeinflusst.

Der Vollständigkeit halber ist noch zu erwähnen, dass der in Figur 1 dargestellte regelbare Schwingungsdämpfer zusätzlich ein Bodenventil 190 im Boden des Arbeitszylinders 20 aufweist. Dieses Bodenventil 190 ist an sich bekannt bei Schwingungsdämpfern und ist zwischen die untere Druckmittelleitung 54 und einen Tank 199 geschaltet. Das Bodenventil 190 weist hierfür beispielsweise zwischen der unteren Druckmittelleitung 54 und dem Tank 199 eine Blende 191 auf, die mit der unteren Druckmittelleitung 54 in Verbindung steht. An diese Blende 191 sind auf der der Druckmittelleitung 54 abgewandten Seite zwei antiparallel geschaltete Rückschlagventilen 192, 193 gelegt, wobei zusätzlich noch eine weitere Blende 194 parallel geschaltet ist.

Schließlich ist zwischen die beiden Druckmittelleitungen 52, 54 noch ein ebenfalls an sich bekanntes und sogenanntes Blow-Off-Ventil 200 geschaltet. Dieses Blow-Off-Ventil 200 dient dazu, eine maximal erreichbare Dämpferkraft an dem Schwingungsdämpfer einzustellen. Hierfür besteht, wie gezeigt, das Blow-Off-Ventil 200 z.B. aus zwei antiparallel geschalteten Rückschlagventilen 201, 202, denen jeweils eine Blende 203, 204 vorgeschaltet ist.

Die Wirkungsweise des regelbaren Schwingungsdämpfers von Figur 1 ist Folgende.

Es wird zunächst davon ausgegangen, dass sich der Kolben 30 nach oben bewegt und sich damit der Arbeitsraum 40 (Zugraum) verkleinert. Diese Betriebsweise wird im Folgenden als Zugbetrieb bezeichnet. Hierdurch steigt der Druck im Arbeitsraum 40 (Zugraum) mit immer weiterer Bewegung des Kolbens 30 an. Der Druck in der Druckmittelleitung 52 steigt. Das zweite Rückschlagventil 112 befindet sich in Sperrrichtung, sodass dieser Druck nicht an die Niederdruckkammer 122 gelangen kann. Allerdings ist das dritte Rückschlagventil 114 in Durchlassrichtung geschaltet, sodass beim Überwinden der Federkraft des einstellbaren Federelementes 124 des Rückschlagventils 114 dieses öffnet und der Druck der Druckmittelleitung 52 in der Hochdruckkammer 120 ansteht. Zusätzlich befindet sich das fünfte Rückschlagventil 132 zur Pilotkammer 130 in Durchlassrichtung. Aufgrund der Verbindung zwischen der Hochdruckkammer 120 und der Pilotkammer 130 stellt sich ein über die Blenden 170, 172 bestimmter Druck in der Pilotkammer 130 ein, wobei der über das Pilotventil 160 von der Niederdruckkammer 122 kommende Druck in der Pilotkammer 130 als Gegendruck ansteht. Über eine geeignete Bestromung des Elektromagneten 134 kann das Pilotventil 160 gesteuert werden, sodass sich der letztlich in der Pilotkammer 130 einstellende Druck in Abhängigkeit von der Bestromung des Pilotventils 160 einstellt. Dieser in der Pilotkammer 130 wirkende Druck wird über die Steuerleitung 144 dem Hauptschieber 140 zugeführt, sodass der Druck in der Pilotkammer 130 die Stellung des Hauptschiebers 140 mit beeinflusst. Hierdurch kann durch entsprechende Bestromung des Pilotventils 160 die Dämpfercharakteristik des Schwingungsdämpfers bei Zugbelastung des Kolbens 30 eingestellt werden.

Betrachtet man nun die entgegengesetzte Bewegung des Kolbens 30, also in Richtung nach unten (Druckbetrieb), so erhöht sich der Druck in der unteren Druckmittelleitung 54. In diesem Fall befindet sich das vierte Rückschlagventil 116 in seiner Sperrstellung und das erste Rückschlagventil 110 zur Hochdruckkammer 120 in Durchlassrichtung. In diesem Fall steht die Hochdruckkammer 120 über die Blende 170 mit der Pilotkammer 130 in Verbindung und es stellt sich ein ähnlicher Wirkungsmechanismus wie oben bei der Druckbelastung ein.

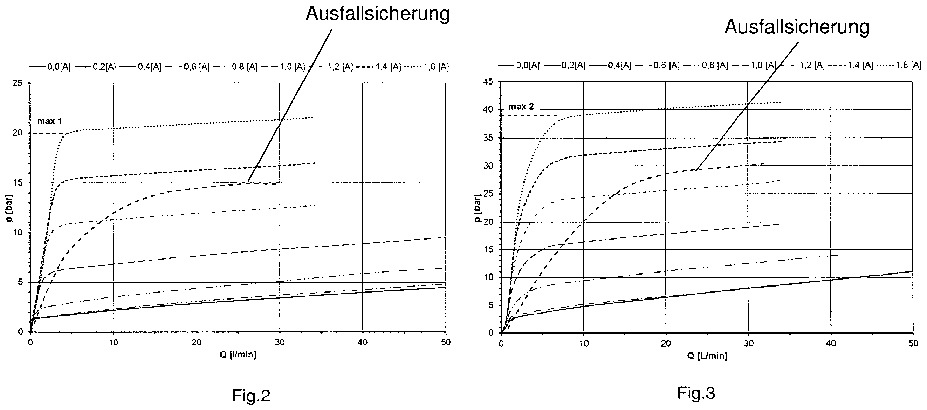

In der Figur 2 und 3 sind die Kraft-/Volumentstrom- Kennlinien bei einer Zug- beziehungsweise Druckbelastung (Zugbetrieb beziehungsweise Druckbetrieb) des Kolbens 30 im Arbeitszylinder 20 in Abhängigkeit von der Bestromung des Pilotventils 160 dargestellt. Figur 2 zeigt die Kennlinie bei Druckbelastung und Figur 3 bei Zugbelastung. Das regelbare Pilotventil 160 ist in der vorliegenden Ausführungsform als sogenanntes Normally-Open-Ventil ausgestaltet. Dies bedeutet, dass bei Nichtbestromung des Elektromagneten 134 dieses Pilotventils 160 das Ventil offen ist. In diesem Fall steht also die Niederdruckkammer 122 mit der Pilotkammer 130 ungedrosselt in Verbindung. Die über die Steuerleitung 144 zum Hauptschieber 140 geführte hydraulische Kraft ist deshalb minimal, wodurch sich bei der Zugbelastung eine minimale Dämpfungskennlinie einstellt. Diese minimale Dämpfungskennlinie bei Zugbelastung ist in Figur 2 die unterste Kennlinie. Wird dagegen das geregelte Pilotventil 160 maximal bestromt, ist das Pilotventil 160 fast geschlossen und es stellt sich über die Steuerleitung 144 ein maximaler Druck auf den Hauptschieber 140 ein. Ergebnis ist der obere Kurvenverlauf in Figur 2 für die Druckbelastung mit dem Maximalwert maxi. Durch Variation der Bestromung können die verschiedenen Kennlinienverläufe eingestellt werden.

Ähnliches gilt für die Darstellung in Figur 3 bei Zugbelastung. Die unterste Kurve zeigt eine schwächste Dämpfungscharakteristik bei Zugbelastung. Wird das Pilotventil 160 dagegen maximal bestromt, beispielsweise mit 1,6 A, stellt sich der obere Dämpfungsverlauf ein (vgl. max2).

Wie ein Vergleich der beiden Kurven in Figur 2 und Figur 3 ergibt, sind die maximalen Dämpfungswerte beider Kennlinien unterschiedlich. Dies wird durch eine geeignete Blendenwahl der Blenden 170 und 172 der Ventileinrichtung 100 erreicht.

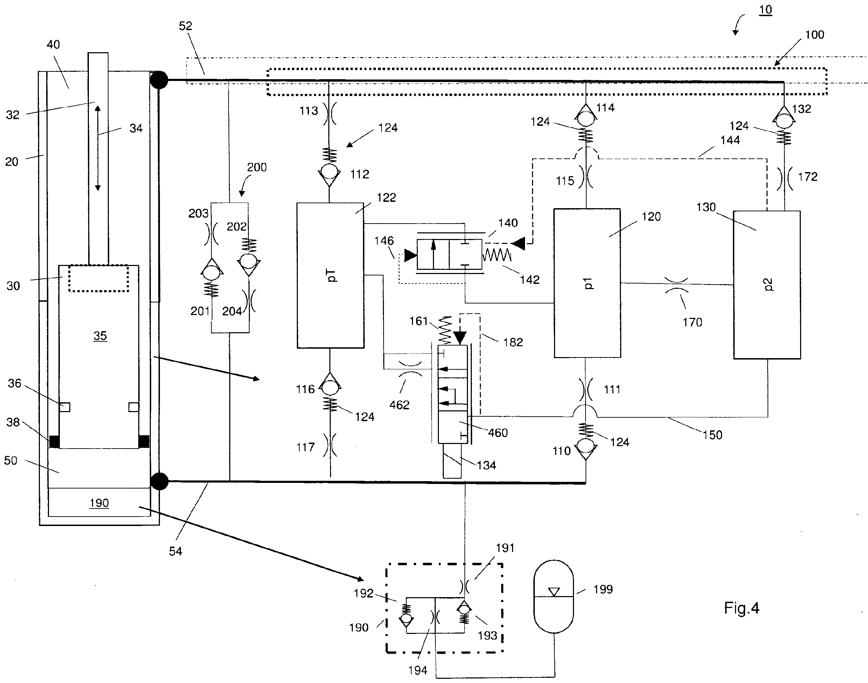

In Figur 4 ist ein zweites Ausführungsbeispiel eines regelbaren Schwingungsdämpfers 10 dargestellt, welcher in großen Teilen ähnlich zu dem Schwingungsdämpfer von Figur 1 aufgebaut ist. Im Folgenden werden lediglich die Unterschiede zu der Ausführungsform von Figur 1 erläutert.

Der Schwingungsdämpfer von Figur 4 unterscheidet sich in der Ausführungsform des Pilotventils und in dessen Beschaltung. Das Pilotventil ist jetzt mit dem Bezugszeichen 460 bezeichnet. Dieses Pilotventil 460 ist wieder als elektromagnetisches Ventil ausgebildet. Dieses Pilotventil 460 ist vorliegend wiederum stromgeregelt und verfügt deshalb erneut über einen Elektromagneten 134. Das Pilotventil 460 ist als 3/3-Ventil, welches proportional arbeitet, ausgelegt, wie das Schaltsymbol in Figur 4 zeigt. Zwischen der Niederdruckkammer 122 und dem Pilotventil 460 spaltet sich die Leitung 150 in zwei Verbindungsleitungen auf. Eine dieser Verbindungsleitungen weist eine Blende 462 auf, während die parallel verlaufende weitere Verbindungsleitung keine weiteren Bauteile aufweist. Wie in dem Ausführungsbeispiel von Figur 1, arbeitet dieses Pilotventil 460 ebenfalls gegen eine Federeinrichtung 161 und gegen einen von der Pilotkammer 130 kommenden Druck, der über die Steuerleitung 182 parallel zur Federkraft der Federeinrichtung 161, gegen die das Pilotventil 460 arbeitet, gerichtet ist. Die Blende 462 hat den Zweck, bei Stromausfall eine mittlere Dämpfercharakteristik, also eine mittlere Kennlinie (vergleiche Figur 2 und Figur 3) einzustellen (Failsafe). Die mittlere Kennlinie ist dort jeweils strichliert eingezeichnet.

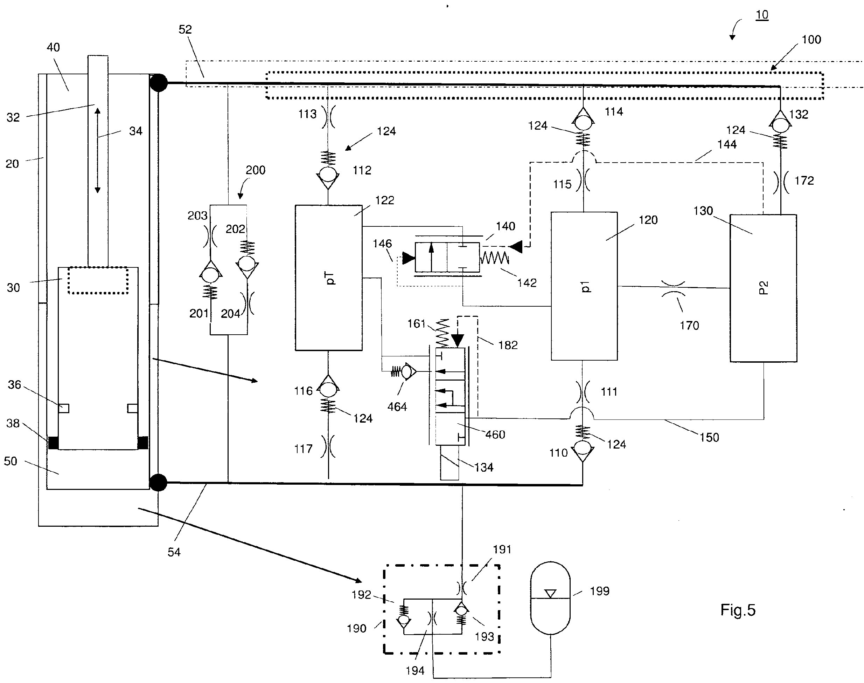

Figur 5 zeigt eine weitere Variante des regelbaren Schwingungsdämpfers. Anstelle der in Figur 4 vorgesehenen Blende 462 verfügt das Pilotventil 460 jetzt über ein weiteres Rückschlagventil 464. Hierdurch können bessere Failsafe-Kennlinien erzeugt werden.

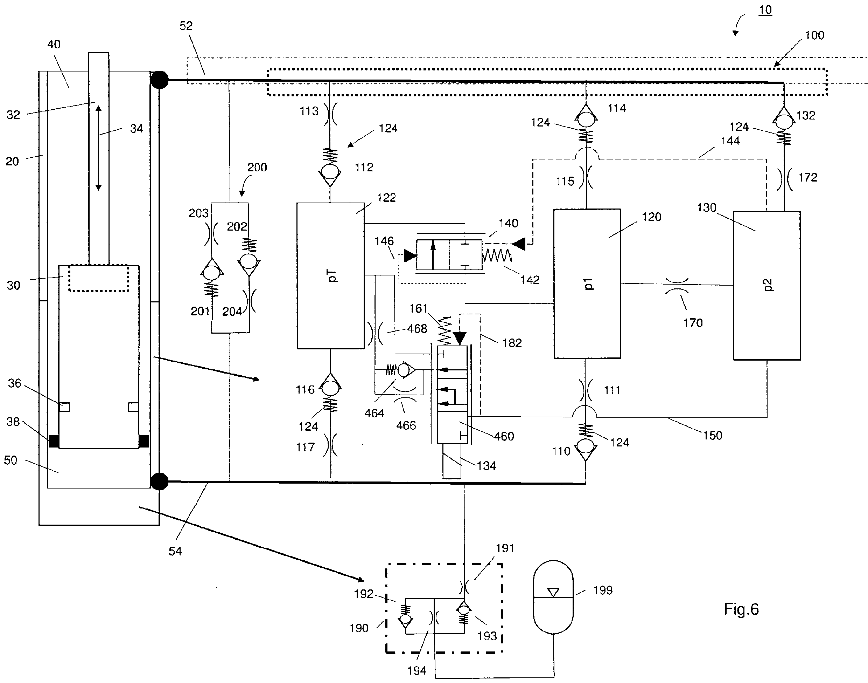

Weiterhin zeigt Figur 6 ein viertes Ausführungsbeispiel, bei dem das bereits aus den Figuren 4 und 5 bekannte Pilotventil 460 eingesetzt ist. Allerdings ist zu dem in Figur 5 gezeigten Rückschlagventil 464 jetzt eine weitere Blende 466 parallel geschaltet und eine weitere Blende 468 zwischen das Rückschlagventil 464 und die Niederdruckkammer 122 geschaltet. Die letztgenannte Blende 468 dient dabei als Dämpfungsblende.

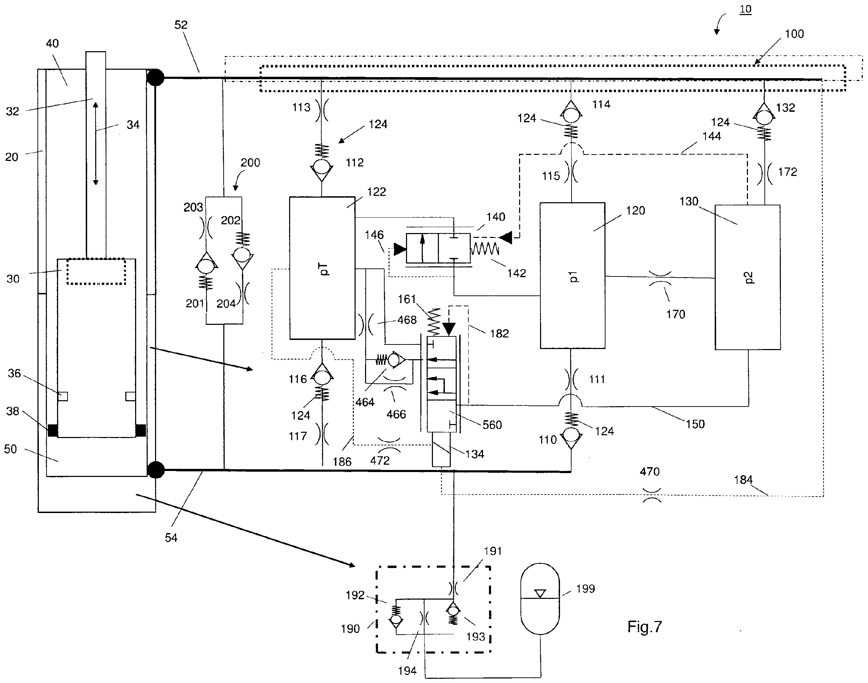

In Figur 7 ist ein fünftes Ausführungsbeispiel des regelbaren Schwingungsdämpfers 10 dargestellt, welches in weiten Teilen dem vierten Ausführungsbeispiel gleicht. Der Schwingungsdämpfer 10 nach dem fünften Ausführungsbeispiel weist insbesondere ein anders aufgebautes Pilotventil 560 auf, bei welchem der Elektromagnet 134 vom Druckmittel durchströmbar ausgeführt ist. Hierzu geht eine Steuerleitung 184 von der Druckmittelleitung 52 ab und mündet in den Elektromagnet 134. In der Steuerleitung 184 ist eine Blende 470 angeordnet, mit welcher der über die Steuerleitung 184 in den Elektromagnet 134 eingebrachte Druck eingestellt werden kann.

Weiterhin verläuft eine weitere Steuerleitung 186 zwischen dem Elektromagnet 134 und der Niederdruckkammer 122. In der Steuerleitung 186 ist eine Blende 472 angeordnet.

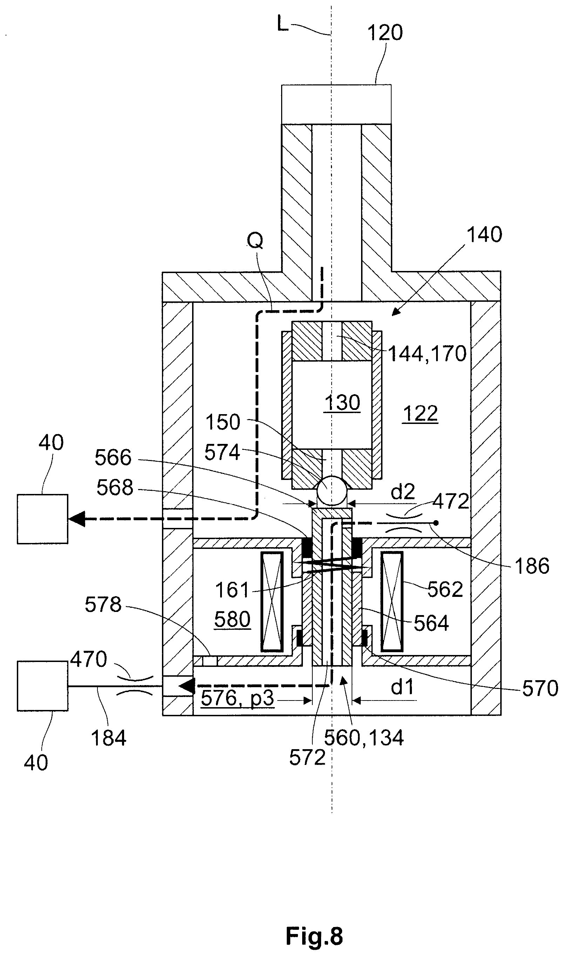

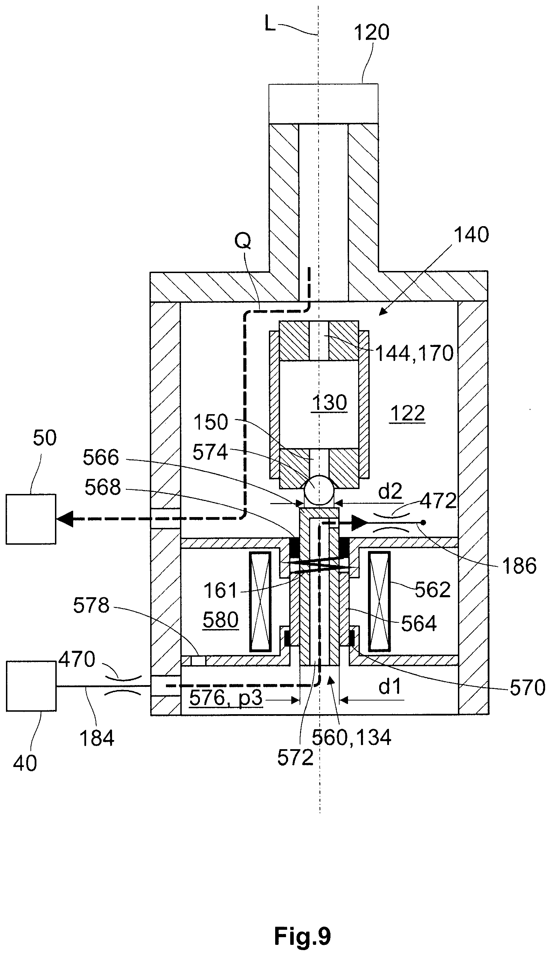

In den Figuren 8 und 9 ist der Aufbau des Pilotventils 560 anhand einer Prinzipskizze im Detail gezeigt. Das Pilotventil 560 umfasst eine bestrombare Spule 562 auf, mit welcher ein Anker 564 entlang einer Längsachse L des Pilotventils 560 bewegbar ist. Mit dem Anker 564 ist ein Stößel 566, mitunter auch als Achse bezeichnet, fest verbunden, so dass der Stößel 566 dieselben Bewegungen wie der Anker 564 ausführt. Damit sich der Anker 564 und der Stößel 566 entlang der Längsachse L bewegen können, sind ein erstes Lager 568 und ein zweites Lager 570 vorgesehen, die beispielsweise als Gleitlager ausgebildet sein können. Um eine Fluidverbindung zwischen der Steuerleitung 184 und der Steuerleitung 186 herstellen zu können, weist der Stößel 566 einen Kanal 572 auf. Auch das erste Lager 568 und das zweite Lager 570 können so ausgestaltet sein, dass sie eine Fluidverbindung zwischen der Steuerleitung 184 und der Steuerleitung 186 herstellen können. Der Stößel 566 wirkt mit einem Verschlusselement 574 zusammen, welches Teil des Hauptschiebers 140 ist. Mit dem Verschlusselement 574 kann die Leitung 150 zwischen der Pilotkammer 130 und der Niederdruckkammer 122 geöffnet und geschlossen werden. Im dargestellten Beispiel ist das Verschlusselement 574 kugelförmig ausgestaltet. Der Stößel 566 ist so ausgebildet, dass sich sein zum Verschlusselement 574 weisendes Ende in der Niederdruckkammer 122 befindet, während sein vom Verschlusselement 574 wegweisendes Ende in einer Magnetkammer 576 angeordnet ist. Dies hat zur Folge, dass verschiedene Drücke, nämlich der Druck pT der Niederdruckkammer 122 und der Druck p3 der Magnetkammer 576, auf den Stößel 566 wirken, worauf im Folgenden näher eingegangen wird. Die Magnetkammer 576 ist über eine Durchlassöffnung 578 mit einem die Spulen 562 umgebenden Spulenraum 580 verbunden, so dass im Spulenraum 580 und in der Magnetkammer 576 derselbe Druck herrscht.

Der Stößel 566 weist einen Durchmesser d1 und das kugelförmige Verschlusselement 574 einen Durchmesser d2 auf. Der Durchmesser d1 kann beispielsweise 3 oder 4 mm und der Durchmesser d2 2.3 mm betragen. In jedem Fall ist der Durchmesser d1 größer als der Durchmesser d2. Zudem ist der Durchmesser der Blende 470 kleiner als der Durchmesser der Blende 472.

Unabhängig davon, ob sich der Schwingungsdämpfer 10 im Druckbetrieb oder im Zugbetrieb befindet, stellt sich ein Hauptvolumenstrom Q von der Hochdruckkammer 120 durch die Niederdruckkammer 122 ein, sofern der Hauptschieber 140 geöffnet ist. Von der Niederdruckkammer 122 fließt das Druckmittel im Druckbetrieb weiter zum Zugraum 40 und im Zugbetrieb zum Druckraum 50 (vgl. Figuren 8 und 9).

Wie bereits erläutert, ist der Durchmesser der Blende 470 kleiner als der Durchmesser der Blende 472. Im in Figur 8 dargestellten Druckbetrieb fließt das Druckmittel zudem aus der Niederdruckkammer 122 durch die Steuerleitung 186 und die Blende 472 in den Kanal 572 und anschließend in die Magnetkammer 576 und von dort durch die Steuerleitung 184 und die Blende 470 in den Zugraum 40.

Im in Figur 9 dargestellten Zugbetrieb fließt das Druckmittel aus dem Zugraum 40 durch die Steuerleitung 184 und die Blende 470 in die Magnetkammer 576 und von dort durch den Kanal 572 und durch die Steuerleitung 186 und die Blende 472 in die Niederdruckkammer 122. Von dort fließt das Druckmittel wie für den Hauptvolumenstrom Q beschrieben in den Druckraum 50.

Im Druckbetrieb ergeben sich schließende Kräfte auf den Stößel 566, da sich aufgrund der Tatsache, dass die Blende 472 den im Vergleich zur Blende 470 größeren Durchmesser aufweist, der Staudruck in der Magnetkammer 576 erhöht. Hierdurch wird die auf die zum Schließelement 574 hinzeigende Ringfläche des Stößels 566 wirkende öffnende Kraft mehr als kompensiert und der Stößel 566 öffnet durch die leichte hydraulische Verspannung kontrollierter über dem Hauptvolumenstrom Q. Die von den Spulen 562 aufzubringende Magnetkraft kann hierdurch kleiner sein, was die Energieeffizienz der geregelten Schwingungsdämpfers 10 verbessert.

Im Zugbetrieb wird der Kanal 572 in umgekehrter Richtung durchflossen. Auch hier ergeben sich schließende Kräfte auf den Stößel 566, da der Druck p1 der Hochdruckkammer 120 auch in der Magnetkammer 576 anliegen würde und somit gleich dem Druck p3 wäre, wenn das Druckmittel nicht die Blende 470 durchströmen müsste. Ohne die Blende 470 wäre die Schließkraft sehr groß und es bestünde die Gefahr, dass das Pilotventil 560 überhaupt nicht öffnen würde. Durch eine geeignete Wahl der Größe der Blende 470 kann der Druck p3 so eingestellt werden, dass die Schließkraft den gewünschten Wert aufweist.

Mit steigendem Hauptvolumenstrom Q steigt sowohl die Niederdruck als auch der Druck p3 in der Magnetkammer 576, wodurch sich das Pilotventil 560 automatisch stabilisiert.

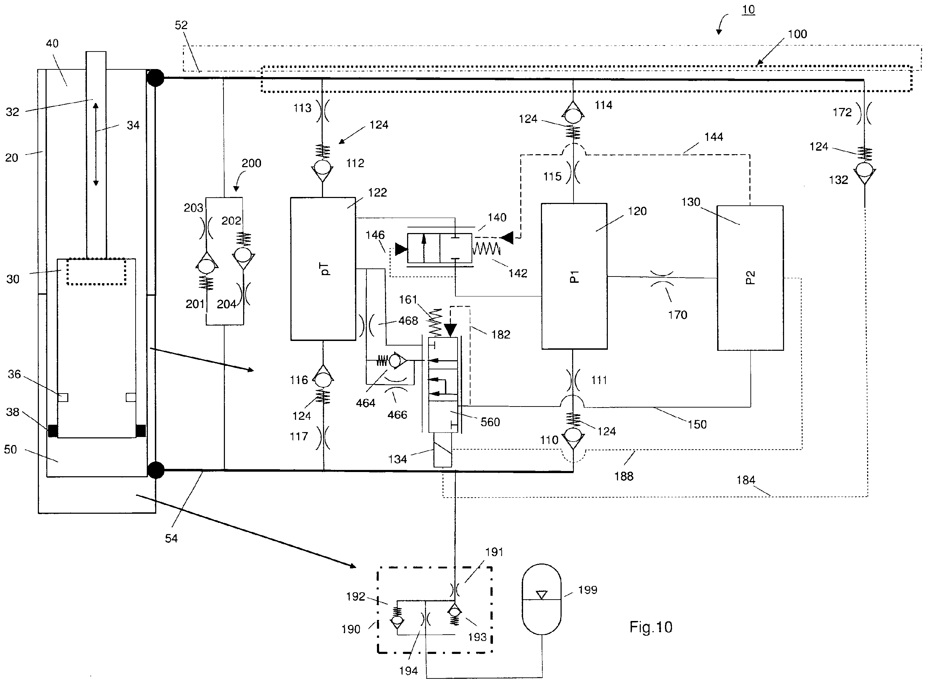

Figur 10 zeigt ein sechstes Ausführungsbeispiel des regelbaren Schwingungsdämpfers 10, bei welchem der Schwingungsdämpfer wie auch beim fünften Ausführungsbeispiel das durchstströmbare Pilotventil 560 aufweist. Auch in diesem Ausführungsbeispiel geht die Steuerleitung 184 von der Druckmittelleitung 52 ab und mündet in den Elektromagnet 134. Allerdings ist in diesem Ausführungsbeispiel das fünfte Rückschlagventil 132 nicht zwischen dem oberen Arbeitsraum 40 und der Pilotkammer 130, sondern zwischen dem oberen Arbeitsraum 40 und dem Elektromagnet 134 in der Steuerleitung 184 angeordnet. Weiterhin umfasst die Steuerleitung 184 zwischen dem oberen Arbeitsraum 40 und dem fünften Rückschlagventil 132 die weitere Blende 172.

Weiterhin verläuft eine weitere Steuerleitung 188 zwischen dem Elektromagnet 134 und der Pilotkammer 130.

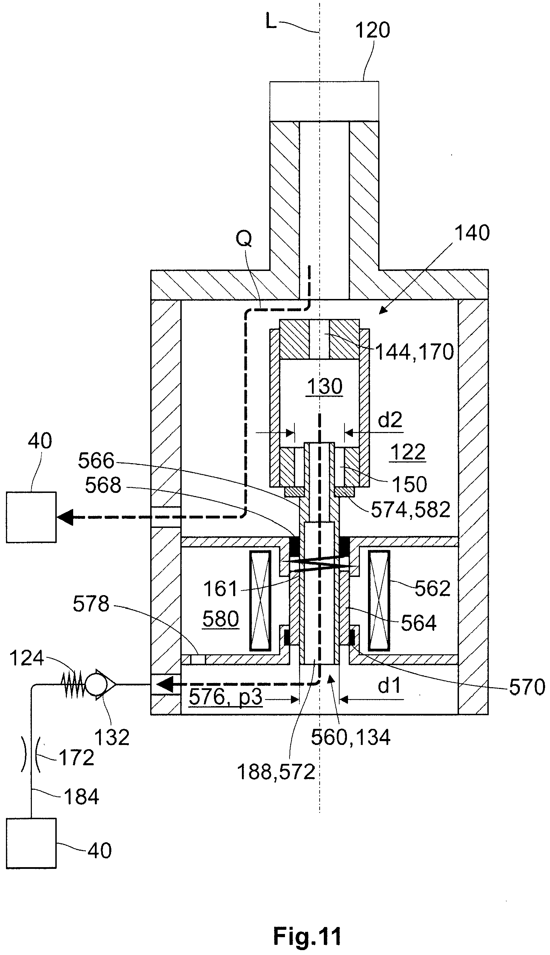

In Figur 11 ist der Aufbau des Pilotventils 560 anhand einer Prinzipskizze im Detail gezeigt. Im Folgenden wird nur auf die Unterschiede zwischen dem in den Figuren 8 und 9 gezeigten Pilotventil 560 und dem in Figur 11 gezeigten Pilotventil 560 eingegangen. Das Verschlusselement 574 ist in diesem Ausführungsbeispiel nicht kugelförmig ausgestaltet, sondern umfasst eine Dichtscheibe 582, welche mit dem Stößel 566 verbunden ist. In diesem Fall definiert die Leitung 150 den wirksamen Durchmesser d2. Mit der Dichtscheibe 582 kann die Leitung 150 und folglich die hierüber bereitgestellte Verbindung zwischen der Pilotkammer 130 und der Niederdruckkammer 122 mit einer entsprechenden Bestromung der Spule 562 geöffnet und geschlossen werden. Die weitere Steuerleitung 188 wird vom Kanal 572 gebildet.

Unabhängig davon, ob sich der Schwingungsdämpfer 10 im Druckbetrieb oder im Zugbetrieb befindet, stellt sich ein Hauptvolumenstrom Q von der Hochdruckkammer 120 durch die Niederdruckkammer 122 ein, sofern der Hauptschieber 140 geöffnet ist. Von der Niederdruckkammer 122 fließt das Druckmittel im Druckbetrieb weiter zum Zugraum 40 und im Zugbetrieb zum Druckraum 50.

In Figur 11 ist das Pilotventil im Druckbetrieb dargestellt. Hierbei fließt das Druckmittel zudem aus der Hochdruckkammer 120 durch die Blende 170 in die Pilotkammer 130 und durch den Kanal 572, der die Steuerleitung 188 bildet, und durch die Steuerleitung 184 und die Blende 172 in den Zugraum 40, sofern der Druck des Druckmittels hoch genug ist, um das Rückschlagventil 132 zu öffnen. Der Druck des Druckmittels in der Steuerleitung 184 kann mit der Blende 170 beeinflusst werden.

Im nicht dargestellten Zugbetrieb fließt das Druckmittel aus dem Zugraum 40 durch die Steuerleitung 184 und die Blende 172, wo der Druck gemindert wird. Das Rückschlagventil 132 stoppt den weiteren Fluss des Druckmittels durch die Leitung 184. Auch in diesem Ausführungsbeispiel kann durch eine geeignete Wahl der Größe der Blende 170 und der weiteren Blende 172 der Druck p3 so eingestellt werden, dass die auf den Stößel 566 wirkende Schließkraft den gewünschten Wert aufweist.

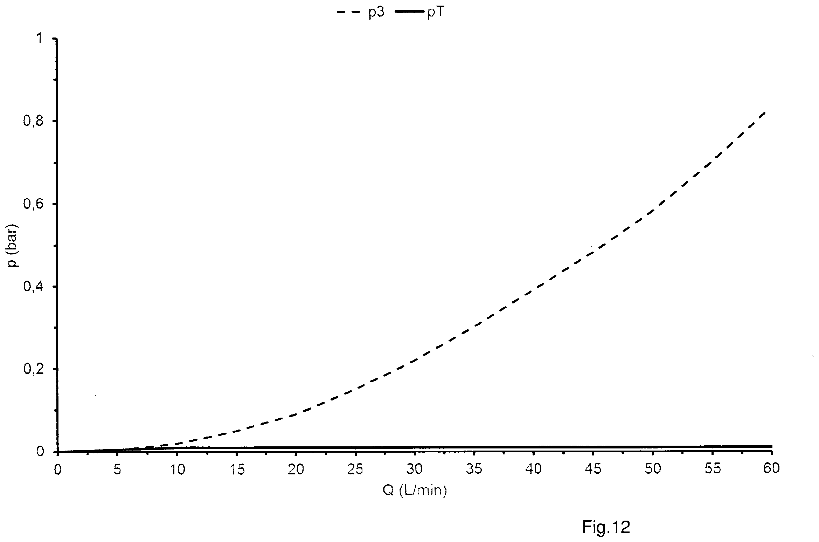

In den Figuren 12 bis 15 ist der sich einstellende Druck pT in der Niederdruckkammer 122 und der Druck p3 in der Magnetkammer 576 in Abhängigkeit des Hauptvolumenstroms Q dargestellt, jeweils für eine geeignete und eine ungeeignete Wahl der Blenden 470 und 472 im Zug- und im Druckbetrieb.

In der Figur 12 ist ein Beispiel für eine ungeeignete Auslegung der Blenden 470 und 472 im Zugbetrieb dargestellt. Man erkennt, dass der Druck p3 in der Magnetkammer 576 mit steigendem Hauptvolumenstrom Q ab einem Wert von 10 L/min sehr schnell ansteigt, wodurch sehr starke schließende Kräfte auf den Stößel 566 wirken. Diese schließenden Kräfte können vom Magnet 134 in nur sehr begrenztem Umfang kompensiert werden. Infolgedessen bleibt das Pilotventil 560 zumindest ab einem Hauptvolumenstrom Q von ca. 10 L/min geschlossen und der Druck pT in der Niederdruckkammer 122 bleibt im Wesentlichen bei null.

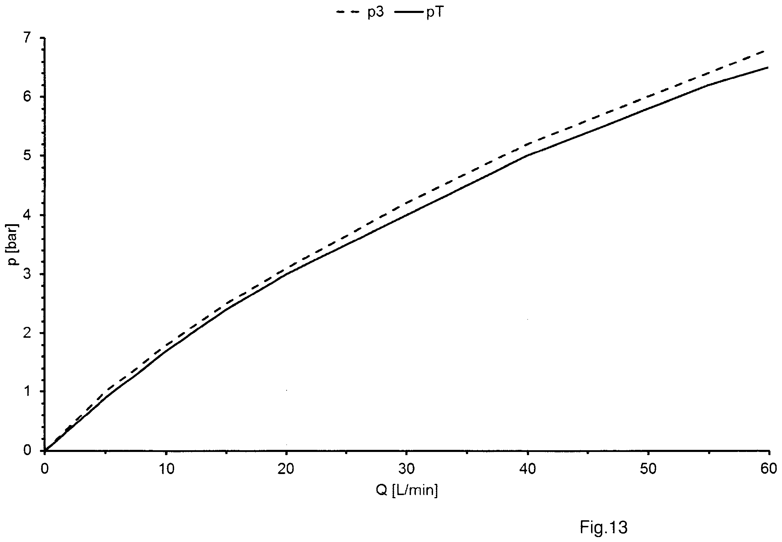

In Figur 13 ist ein Beispiel für eine geeignete Auslegung der Blenden 470 und 472 im Zugbetrieb dargestellt. Über den gesamten dargestellten Hauptvolumenstrom Q ist der Druck p3 in der Magnetkammer 576 etwas höher als der Druck pT in der Niederdruckkammer 122. Hierdurch ist gewährleistet, dass das Pilotventil 560 unabhängig vom Wert des Hauptvolumenstroms Q mit den vom Magnet 134 erzeugen Kräfte kontrolliert geöffnet werden kann.

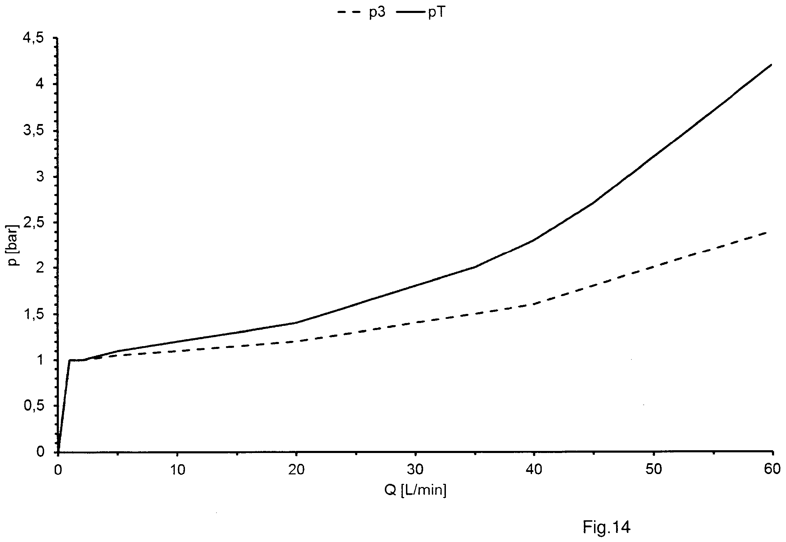

In Figur 14 ist ein Beispiel für eine ungeeignete Auslegung der Blenden 470 und 472 im Druckbetrieb dargestellt. Im Vergleich zu den Figuren 10 und 11 ist zu erkennen, dass nun der Druck p3 in der Magnetkammer 576 geringer ist als der Druck pT in der Niederdruckkammer 122. Wenn die Blenden 470 und 472 wie in Figur 12 dargestellt ausgelegt werden, ergibt sich ein zu geringer Druck p3 in der Magnetkammer 576, so dass keine ausreichend große Schließkraft auf den Stößel 566 wirkt. Das Pilotventil 560 öffnet ab einem Hauptvolumenstrom von ca. 5 L/min schlagartig, wenn, wie in den Figuren 8 und 9 gezeigt, der Durchmesser d1 des Stößels 566 größer ist als der Durchmesser d2 des Schließelements 574.

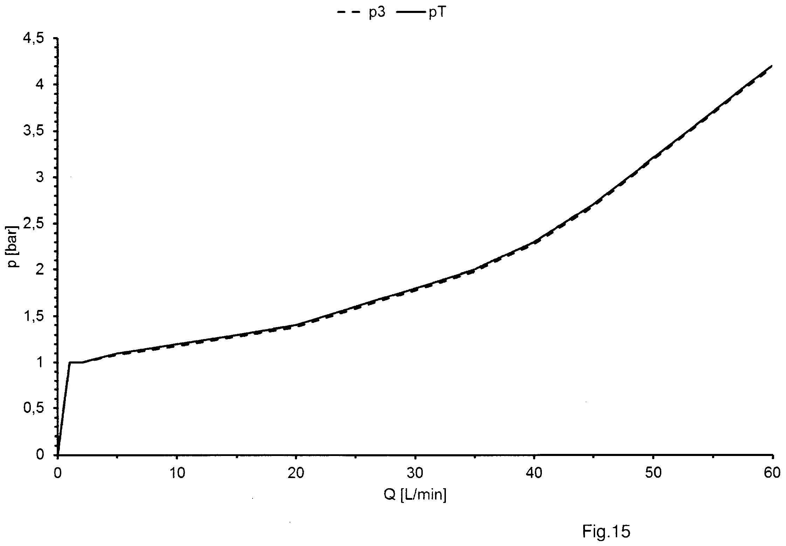

Figur 15 zeigt ein Beispiel für eine geeignete Auslegung der Blenden 470 und 472 im Druckbetrieb. Der Druck pT in der Niederdruckkammer 122 ist über den gesamten Volumenstrom Q nahezu gleich wie der Druck p3 in der Magnetkammer 576. Hierdurch kann das Pilotventil 560 sehr kontrolliert geöffnet werden.

Wenn der hydraulische Widerstand der Blende 170 und des Pilotventils 560 kleiner ist als der Widerstand der Blende 470 und Blende 472, ergibt sich folgendes:

$$p1 > p2 > p3 > pT$$

Wenn der hydraulische Widerstand der Blende 170 und des Pilotventils 560 größer ist als der Widerstand der Blende 470 und der Blende 472, ergibt sich folgendes:

$$p1 > p3 > p2 > pT$$

Da die Blende 470 im Zugbetrieb des Schwingungsdämpfers 10 direkt mit der Hochdruckkammer 120 in Fluidkommunikation steht, kann man hierdurch die Wirkung der Blende 172 zusätzlich verstärken.

Bezugszeichenliste

| 10 | Regelbarer Schwingungsdämpfer |
| 20 | Arbeitszylinder |
| 30 | Kolben |
| 32 | Kolbenstange |
| 34 | Bewegungspfeil |
| 35 | Bauraum |
| 36 | Bohrungen |
| 38 | Dichtung |
| 40 | Arbeitsraum (Zugraum) |
| 50 | Arbeitsraum (Druckraum) |
| 52 | Druckmittelleitung |
| 54 | Druckmittelleitung |
| 100 | Ventileinrichtung |
| 110 | erstes Rückschlagventil |
| 111 | erste Blende |
| 112 | zweites Rückschlagventil |
| 113 | zweite Blende |
| 114 | drittes Rückschlagventil |
| 115 | dritte Blende |
| 116 | viertes Rückschlagventil |
| 117 | vierte Blende |
| 120 | Hochdruckkammer |
| 122 | Niederdruckkammer |
| 124 | einstellbares Federelement |
| 130 | Pilotkammer |
| 132 | fünftes Rückschlagventil |
| 134 | Magnet |
| 140 | Hauptschieber |
| 142 | Federeinrichtung |
| 144 | Steuerleitung |
| 146 | Steuerleitung |
| 150 | Leitung |
| 160 | Pilotventil |
| 161 | Federeinrichtung |
| 170 | fünfte Blende |
| 172 | sechste Blende |
| 182 | Steuerleitung |
| 186 | weitere Steuerleitung |
| 184 | Steuerleitung |
| 188 | weitere Steuerleitung |
| 190 | Bodenventil |
| 191 | Blende |
| 192 | Rückschlagventil |
| 193 | Rückschlagventil |
| 194 | Blende |
| 199 | Tank |
| 200 | Blow-Off-Ventil |
| 201 | Rückschlagventil |
| 202 | Rückschlagventil |
| 203 | Blende |
| 204 | Blende |
| 460 | Pilotventil |
| 462 | Blende |
| 464 | Rückschlagventil |
| 466 | Blende |
| 468 | Blende |
| 470 | Blende |
| 472 | Blende |
| 560 | Pilotventil |
| 562 | Spule |
| 564 | Anker |
| 566 | Stößel |
| 568 | erstes Lager |
| 570 | zweites Lager |
| 572 | Kanal |
| 574 | Verschlusselement |
| 576 | Magnetkammer |
| 578 | Durchlassöffnung |
| 580 | Spulenraum |
| 582 | Dichtscheibe |
| d1 | Durchmesser |
| d2 | Durchmesser |
| L | Längsachse |
| p1 | Druck |
| p2 | Druck |
| p3 | Druck |
| pT | Druck |

**Patentansprüche**

1. Regelbarer Schwingungsdämpfer (10), insbesondere für Kraftfahrzeuge, mit einem in einem Arbeitszylinder (20) hin- und her bewegbaren Kolben (30), der den Arbeitszylinder (20) in einen oberen Arbeitsraum (40) (Zugraum) und einen unteren Arbeitsraum (50) (Druckraum) unterteilt, wobei beide Arbeitsräume (40, 50) über jeweils eine Druckmittelleitung (52, 54) mit einer Ventileinrichtung (100) verbunden sind und die Ventileinrichtung (100) Folgendes aufweist:

   - eine Brückenschaltung mit vier Rückschlagventilen (110, 112, 114, 116), die kreuzweise in Durchlassrichtung geschaltet sind, wobei die Verbindung eines ersten Brückenzweiges mit zwei zueinander entgegengesetzt geschalteten Rückschlagventilen (110, 114) eine Hochdruckkammer (120) bildet und die Verbindung des zweiten Brückenzweiges mit zwei weiteren zueinander entgegengesetzten Rückschlagventilen (112, 116) eine Niederdruckkammer (122),
   - einen zwischen die Niederdruckkammer (122) und Hochdruckkammer (120) angeordneten, hydraulischen Hauptschieber (140),
   - eine Pilotkammer (130), welche über ein fünftes Rückschlagventil (132) mit der zum oberen Arbeitsraum (40) (Zugraum) gehörenden Druckmittelleitung (52) in Verbindung steht,
   - ein geregeltes Pilotventil (160, 460, 560), über welches die Pilotkammer (130) mit der Niederdruckkammer (122) in Verbindung steht, wobei die Pilotkammer (130) über eine Blende (170) mit der Hochdruckkammer (120) in Verbindung steht.

2. Regelbarer Schwingungsdämpfer (10) nach Anspruch 1,
   **dadurch gekennzeichnet, dass** zwischen dem fünften Rückschlagventil (132) und der Pilotkammer (130) eine weitere Blende (172) angeordnet ist.

3. Regelbarer Schwingungsdämpfer (10) nach Anspruch 1,
   **dadurch gekennzeichnet, dass** zwischen der zum oberen Arbeitsraum (40) (Zugraum) gehörenden Druckmittelleitung (52) und dem fünften Rückschlagventil (132) eine weitere Blende (172) angeordnet ist.

4. Regelbarer Schwingungsdämpfer (10) nach einem der Ansprüche 2 oder 3,
   **dadurch gekennzeichnet, dass** die Blende (170) und weitere Blende (172) unterschiedlich groß ausgebildet sind.

5. Regelbarer Schwingungsdämpfer (10) nach einem der Ansprüche 1 bis 4

**dadurch gekennzeichnet, dass** die vier Rückschlagventile (110, 112, 114, 116) der Brückenschaltung einstellbare Federelemente (124) aufweisen.

6. Regelbarer Schwingungsdämpfer (10) nach einem der Ansprüche 1 bis 5,
   **dadurch gekennzeichnet, dass** sowohl der Hauptschieber (140) als auch das Pilotventil (160, 460, 560) jeweils über eine hydraulische Steuerleitung (144, 182) mit der Pilotkammer (130) verbunden sind.

7. Regelbarer Schwingungsdämpfer (10) nach einem der Ansprüche 1 bis 6,
   **dadurch gekennzeichnet, dass** die mit dem unteren Arbeitsraum (50) verbundene Druckmittelleitung (54) mit einem Bodenventil (190) verbunden ist.

8. Regelbarer Schwingungsdämpfer (10) nach einem der Ansprüche 1 bis 7,
   **dadurch gekennzeichnet, dass** zwischen die beiden Druckmittelleitungen (52, 54) ein Blow-Off-Ventil (200) geschaltet ist.

9. Regelbarer Schwingungsdämpfer (10) nach einem der Ansprüche 1 bis 8,
   **dadurch gekennzeichnet, dass** das Pilotventil (460, 560) als ein 3/3 Proportionalventil ausgebildet ist, wobei zwischen einem Ausgang dieses Pilotventils (460, 560) und der Niederdruckkammer (122) eine weitere Blende (466) oder ein weiteres Rückschlagventil (464) geschaltet ist.

10. Regelbarer Schwingungsdämpfer (10) nach einem der Ansprüche 1 bis 9,
    **dadurch gekennzeichnet, dass** das Pilotventil (560) einen von einem Druckmittel durchströmbaren Magnet (134) umfasst.

11. Regelbarer Schwingungsdämpfer (10) nach Anspruch 10,
    **dadurch gekennzeichnet, dass** der Magnet (134) einen entlang einer Längsachse (L) bewegbaren Stößel (566) umfasst, welcher mit einem ersten Ende ein Verschlusselement (574) betätigt und mit dem ersten Ende in die Niederdruckkammer (122) und mit einem zweiten Ende in eine Magnetkammer (576) hineinragt.

12. Regelbarer Schwingungsdämpfer (10) nach Anspruch 11,
    **dadurch gekennzeichnet, dass** der Stößel (566) einen Kanal (572) aufweist, welcher vom Druckmittel durchströmbar ist und die Niederdruckkammer (122) und die Magnetkammer (576) fluidisch verbindet.

13. Regelbarer Schwingungsdämpfer (10) nach Anspruch 12,
**dadurch gekennzeichnet, dass**

- der Stößel (566) zylinderförmig ausgestaltet ist und einen ersten Durchmesser (d1) aufweist,
- das Verschlusselement (574) einen zweiten Durchmesser (d2) aufweist, der sich vom ersten Durchmesser (d1) unterscheidet, und
- der Kanal (572) des Stößels (566) am ersten Ende des Stößels (566) mit einer Blende (472) und am zweiten Ende des Stößels (566) mit einer Blende (470) verbunden ist, wobei die Größe der Blenden (470, 472) an den ersten Durchmesser (d1) und an den zweiten Durchmesser (d2) angepasst sind.

14. Regelbarer Schwingungsdämpfer (10), insbesondere für Kraftfahrzeuge, mit einem in einem Arbeitszylinder (20) hin- und her bewegbaren Kolben (30), der den Arbeitszylinder (20) in einen oberen Arbeitsraum (40) (Zugraum) und einen unteren Arbeitsraum (50) (Druckraum) unterteilt, wobei beide Arbeitsräume (40, 50) über jeweils eine Druckmittelleitung (52, 54) mit einer Ventileinrichtung (100) verbunden sind und die Ventileinrichtung (100) Folgendes aufweist:

- eine Brückenschaltung mit vier Rückschlagventilen (110, 112, 114, 116), die kreuzweise in Durchlassrichtung geschaltet sind, wobei die Verbindung eines ersten Brückenzweiges mit zwei zueinander entgegengesetzt geschalteten Rückschlagventilen (110, 114) eine Hochdruckkammer (120) bildet und die Verbindung des zweiten Brückenzweiges mit zwei weiteren zueinander entgegengesetzten Rückschlagventilen (112, 116) eine Niederdruckkammer (122),
- einen zwischen die Niederdruckkammer (122) und Hochdrucckammer (120) angeordneten, hydraulischen Hauptschieber (140),
- eine Pilotkammer (130), und
- ein geregeltes Pilotventil (160 460, 560), über welches die Pilotkammer (130) mit der Niederdruckkammer (122) in Verbindung steht, wobei die Pilotkammer (130) über eine Blende (170) mit der Hochdruckkammer (120) in Verbindung steht

**dadurch gekennzeichnet, dass** das Pilotventil (460, 560) als ein 3/3 Proportionalventil ausgebildet ist, wobei zwischen einem Ausgang dieses Pilotventils (460, 560) und der Niederdruckkammer (122) eine weitere Blende (220) oder ein weiteres Rückschlagventil (464) geschaltet ist.

15. Regelbarer Schwingungsdämpfer (10) nach Anspruch 14,
**dadurch gekennzeichnet, dass** das Pilotventil (560) einen von einem Druckmittel durchströmbaren Magnet (134) umfasst.

**Claims**

1. Adjustable vibration damper (10), in particular for motor vehicles, having a piston (30), which is moveable back and forth in a working cylinder (20) and which divides the working cylinder (20) into an upper working chamber (40) (traction chamber) and a lower working chamber (50) (pressure chamber), wherein each of the two working chambers (40, 50) are connected via a respective pressure medium line (52, 54) to a valve device (100) and wherein the valve device (100) comprises the following:

- a bridge connection having four check valves (110, 112, 114, 116), which are connected crosswise in the forward direction, wherein the connection of a first bridge arm to two oppositely connected check valves (110, 114) forms a high pressure chamber (120), and the connection of the second bridge arm to two oppositely connected check valves (112, 116) forms a low pressure chamber (122),
- a hydraulic main slider (140), which is arranged between the low pressure chamber (122) and the high pressure chamber (120),
- a pilot chamber (130), which stands in connection with the pressure medium line (52) belonging to the upper working chamber (40) (traction chamber) via a fifth check valve (132)
- a controlled pilot valve (160, 460, 560), via which the pilot chamber (130) stands in connection with the low pressure chamber (122), whereby the pilot chamber (130) stands in connection with the high pressure chamber (120) via an orifice (170).

2. Adjustable vibration damper (10) in accordance with claim 1, **characterized in that** a further orifice (172) is arranged between the fifth check valve (132) and the pilot chamber (130).

3. Adjustable vibration damper (10) in accordance with claim 1, **characterized in that** a further orifice (172) is arranged between the pressure medium line (52) belonging to the upper working chamber (40) (traction chamber) and the fifth check valve (132).

4. Adjustable vibration damper (10) in accordance with either of claims 2 or 3, **characterized in that** the orifice (170) and the further orifices (172) are implemented in differing sizes.

5. Adjustable vibration damper (10) in accordance with any of claims 1 to 4, **characterized in that** the four check valves (110, 112, 114, 116) of the bridge connection comprise adjustable spring elements (124).

6. Adjustable vibration damper (10) in accordance with any of claims 1 to 5, **characterized in that** both the main slider (140), as well as the pilot valve (160, 460, 560), are each connected to the pilot chamber (130) via a respective hydraulic control line (144, 182).

7. Adjustable vibration damper (10) in with accordance any of claims 1 to 6, **characterized in that** the pressure medium line (54) connected to the lower working chamber (50) is connected to a foot valve (190).

8. Adjustable vibration damper (10) in accordance with any of claims 1 to 7, **characterized in that** a blow off valve (200) is connected between the two pressure medium lines (52, 54).

9. Adjustable vibration damper (10) in accordance with any of claims 1 to 8, **characterized in that** the pilot valve (460, 560) is implemented as a 3/3 proportional valve, wherein a further orifice (466) or a further check valve (464) is connected between an outlet of this pilot valve (460, 560) and the low pressure chamber (122).

10. Adjustable vibration damper (10) in accordance with any of claims 1 to 9, **characterized in that** the pilot valve (560) comprises a magnet (134), through which a pressure medium can flow.

11. Adjustable vibration damper (10) in accordance with any of claims 1 to 10, **characterized in that** the magnet (134) comprises a tappet (566), which is moveable along a longitudinal axis (L) and the first end of which actuates a closure element (574), and the first end of which extends into the low pressure chamber (122) and the second end of which extends into a magnet chamber (576).

12. Adjustable vibration damper (10) in accordance with any of claims 1 to 8, **characterized in that** the tappet (566) comprises a channel (572) through which the pressure medium can flow and in which fluidically connects the low pressure chamber (122) and the magnet chamber (576).

13. Adjustable vibration damper (10) in accordance with claim 12, **characterized in that**

    - the tappet (566) is implemented in a cylindrical shape and comprises a first diameter (d1),
    - the closure element (574) comprises a second diameter (d2) which differs from the first diameter (d1), and
    - the channel (572) of the tappet (566) is connected to an orifice (472) at the first end of the tappet (566) and is connected to an orifice (470) at the second end of the tappet (566), wherein the sizes of the tappets (470, 472) are adapted to the first diameter (d1) and to the second diameter (d2).

14. Adjustable vibration damper (10), in particular for motor vehicles, having a piston (30), which is moveable back and forth in a working cylinder (20) and which divides the working cylinder (20) into an upper working chamber (40) (traction chamber) and a lower working chamber (50) (pressure chamber), wherein each of the two working chambers (40, 50) are connected via a respective pressure medium line (52, 54) to a valve device (100) and wherein the valve device (100) comprises the following:

    - a bridge connection having four check valves (110, 112, 114, 116), which are connected crosswise in the forward direction, wherein the connection of a first bridge arm to two oppositely connected check valves (110, 114) forms a high pressure chamber (120), and the connection of the second bridge arm to two oppositely connected check valves (112, 116) forms a low pressure chamber (122),
    - a hydraulic main slider (140), which is arranged between the low pressure chamber (122) and the high pressure chamber (120),
    - a pilot chamber (130), and
    - a controlled pilot valve (160, 460, 560), via which the pilot chamber (130) stands in connection with the low pressure chamber (122), whereby the pilot chamber (130) stands in connection with the high pressure chamber (120) via an orifice (170),

    **characterized in that** the pilot valve (460, 560) is implemented as a 3/3 proportional valve, whereby a further orifice (220) or a further check valve (464) is arranged between an outlet of this pilot valve (460, 560) and the low pressure chamber (122).

15. Adjustable vibration damper (10) in accordance with claim 14, **characterized in that** the pilot valve (560) comprises a magnet (134) through which a pressure medium can flow.

**Revendications**

1. Amortisseur de vibrations (10), réglable, notamment pour des véhicules automobiles comportant un piston (30) mobile selon un mouvement alterné dans un cylindre (20), et qui subdivise le cylindre (20) en une chambre de travail supérieure (40) (chambre de traction) et une chambre de travail inférieure (50) (chambre de pression), les deux chambres de travail (40, 50) étant reliées par une conduite d'agent de pression (52, 54) respective à une installation de soupape (100) et cette installation de soupape (100) comprend :

- un montage en pont composé de quatre clapets antiretour (110, 112, 114, 116) branchés de façon croisée dans la direction de passage,
* la liaison d'une première branche de la pompe avec deux soupapes antiretour (110, 114) branchées en opposition, formant une chambre haute pression (120) et la liaison de la seconde branche de pompe avec deux autres clapets antiretour (112, 116) branchés en opposition, formant une chambre basse pression (122),
- un tiroir hydraulique principal (140) installé entre la chambre basse pression (122) et la chambre haute pression (120),
- une chambre pilote (130) reliée par un cinquième clapet antiretour (132) à la conduite d'agent de pression (52) faisant partie de la chambre de travail supérieur (40) (chambre de traction),
- un tiroir pilote régulé (160, 460, 560) relié à la chambre basse pression (122) par la chambre pilote (130), cette chambre pilote (130) étant reliée à la chambre haute pression (120) par un diaphragme (170).

2. Amortisseur de vibrations (10) selon la revendication 1,
   **caractérisé en ce que**
   un autre diaphragme (172) est installé entre le cinquième clapet antiretour (132) et la chambre pilote (130).

3. Amortisseur de vibrations (10) selon la revendication 1,
   **caractérisé en ce que**
   un autre diaphragme (172) est installé entre la conduite d'agent de pression (52) faisant partie de la chambre de travail supérieure (40) (chambre de traction) et le cinquième clapet antiretour (132).

4. Amortisseur de vibrations (10) selon l'une des revendications 2 ou 3, **caractérisé en ce que** le diaphragme (170) et l'autre diaphragme (172) sont de dimensions différentes.

5. Amortisseur de vibrations (10) selon l'une des revendications 1 à 4, **caractérisé en ce que** les quatre clapets antiretour (110, 112, 114, 116) du montage en pont ont des éléments de ressort réglables (124).

6. Amortisseur de vibrations (10) selon l'une des revendications 1 à 5, **caractérisé en ce que** à la fois le tiroir principal (140) et le tiroir pilote (160, 460, 560) sont reliés à la chambre pilote (130) par une ligne hydraulique de commande (144, 182) respectives.

7. Amortisseur de vibrations (10) selon l'une des revendications 1 à 6, **caractérisé en ce que** la conduite d'agent de pression (54) reliée à la chambre de travail inférieure (50) est reliée à une soupape de fond (190).

8. Amortisseur de vibrations (10) selon l'une des revendications 1 à 7, **caractérisé par** une soupape de décharge (200) entre les deux conduites d'agent de pression (52, 54).

9. Amortisseur de vibrations (10) selon l'une des revendications 1 à 8, **caractérisé en ce que** le tiroir pilote (460, 560) est une vanne proportionnelle 3/3, et un autre diaphragme (466) ou un autre clapet antiretour (464) sont prévus entre une sortie de ce tiroir pilote (460, 560) et la chambre basse pression (122).

10. Amortisseur de vibrations (10) selon l'une des revendications 1 à 9, **caractérisé en ce que** le tiroir pilote (560) comprend un aimant (134) qui peut être traversé par l'agent de pression.

11. Amortisseur de vibrations (10) selon la revendication 10, **caractérisé en ce que** l'aimant (134) comporte un poussoir (566) mobile selon un axe longitudinal (L) et qui actionne par une première extrémité un élément d'obturation (574) en pénétrant avec la première extrémité dans la chambre basse pression (122) et avec une seconde extrémité dans une chambre d'aimant (576).

12. Amortisseur de vibrations (10) selon la revendication 11, **caractérisé en ce que** le poussoir (566) a un canal (572) que peut traverser l'agent de pression et qui relie par une liaison fluidique la chambre basse pression (122) et la chambre d'aimant (576).

13. Amortisseur de vibrations (10) selon la revendication 12, **caractérisé en ce que**

   - le poussoir (566) est de forme cylindrique et a un premier diamètre (d1),
   - l'élément d'obturation (574) a un second diamètre (d2) différent du premier diamètre (d1), et
   - le canal (572) du poussoir (566) est relié à la première extrémité du poussoir (566) à un diaphragme (472) et à la seconde extrémité du poussoir (566) à un diaphragme (470),
   * la dimension des diaphragmes (470, 472) étant adaptée au premier diamètre (d1) et au second diamètre (d2).

14. Amortisseur de vibrations réglable (10) notamment pour des véhicules automobiles comprenant un piston (30) mobile selon un mouvement alternatif dans un cylindre (20) et subdivisant le cylindre (20) en une chambre de travail supérieure (40) (chambre de traction) et une chambre de travail inférieure (50) (chambre de pression), les deux chambres de travail (40, 50) étant reliés respectivement par une conduite d'agent sous pression (52, 54) avec une installation de soupape (100) et cette installation de soupape (100) comprend :

- un montage en pont de quatre clapets antiretour (110, 112, 114, 116) branchés de façon croisée dans le sens passant, la liaison d'une première branche du pont avec deux clapets antiretour (110, 114) branchés en opposition formant une chambre haute pression (120) et la liaison de la seconde branche de pont avec deux autres clapets antiretour (112, 116) branchés en opposition formant une chambre basse pression (122),
- un tiroir hydraulique principal (140)étant installé entre la chambre basse pression (122) et la chambre haute pression (120),
- une chambre pilote (130), et
- une soupape pilote (160, 460, 560) régulée, qui est reliée à la chambre basse pression (122) par la chambre pilote (130), la chambre pilote (130) étant reliée à la chambre haute pression (120) par un diaphragme (170), amortisseur **caractérisé en ce que**

le tiroir pilote (460, 560) étant réalisé comme tiroir proportionnel à 3/3 voies, un autre diaphragme (220) ou un autre clapet antiretour (464) étant branché entre une sortie de ce tiroir pilote (460, 560) et la chambre basse pression (122).

**15.** Amortisseur de vibrations (10) selon la revendication 14, **caractérisé en ce que**
le tiroir pilote (560) comprend un aimant (134) que peut traverser l'agent de pression.

Fig.1

Fig.3

Fig.2

17

Fig.4

Fig.5

Fig.6

EP 3 631 234 B1

Fig.7

**Fig.8**

**Fig.9**

Fig.10

EP 3 631 234 B1

**Fig.11**

Fig.12

EP 3 631 234 B1

Fig.13

Fig.14

EP 3 631 234 B1

Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3803888 C2
- EP 2470809 B1
- US 20160369862 A1
- JP 2009115319 A
- US 5147018 A
- US 20160091044 A1
- WO 2016066314 A1
- US 20050016086 A1